# EUROPEAN PATENT APPLICATION

(11) **EP 2 533 414 A1**
(43) Date of publication of application: **12.12.2012**
(21) Application number: 11739712.5
(22) Date of filing: 31.01.2011
(51) Int. Cl.: H02P 5/00

(54) **ELECTRICALLY-DRIVEN OPERATION DEVICE AND WORKING MACHINE USING SAME**

(30) Priority: 02.02.2010 JP 2010021472
(71) Applicant: Hitachi Construction Machinery Co., Ltd., Bunkyo-ku Tokyo 112-0004 (JP)
(72) Inventor: YAMASAKI, Masaru, Chiyoda-ku, Tokyo 100-8220 (JP); OCHIAI Masami, Tsuchiura-shi Ibaraki 300-0013 (JP); HAYASE, Isao, Chiyoda-ku, Tokyo 100-8220 (JP)
(74) Representative: Beetz & Partner
(86) International application number: PCT/JP2011/051935
(87) International publication number: WO 2011/096364

(57) **Abstract**

A highly reliable electrically-driven operating device that can automatically correct balance with a simple structure having a small number of parts used, and a working machine incorporating the same are provided. A first electrically-driven actuator 1 includes a first electric motor M1 having a rotor position sensor S. A second electrically-driven actuator 2 includes a second electric motor M2 not having a rotor position sensor. Outputs of the first electrically-driven actuator 1 and the second electrically-driven actuator 2 are combined by an unequal-length link 3. The first electric motor M1 has a positional relationship between a rotor and a magnetic field under an operating condition thereof, the positional relationship producing a maximum torque of the first electric motor; and the second electric motor M2 is configured to produce torque reduced from a maximum torque of the second electric motor under an operating condition thereof by being out of a positional relationship between a rotor and a magnetic field, the positional relationship producing the maximum torque of the second electric motor.

## Description

### Technical Field

The present invention relates, in general, to electrically-driven operating devices and working machines incorporating the same and, in particular, to an electrically-driven operating device performing a single operation using a plurality of synchronous electric motors and a working machine incorporating the same.

### Background Art

In an electrically-driven operating device that performs a single operation using a plurality of electric motors, the operation tends to be performed in an imbalanced state in which load on a specific electric motor increases due to, for example, unevenly applied load on the electric motors. In such a case, the disrupted balance has an adverse effect on the device, such as increased friction loss.

A known technique achieves perfectly synchronized operation of a plurality of motors such that load on the electric motors is made even to maintain balance and a synchronized operation of a plurality of electric motors is performed (see, for example, patent document 1).

### Prior Art Documents

### Patent Document

Patent Document 1
   JP-8-84492-A

### Summary of the Invention

### Problem to be Solved by the Invention

A system disclosed in patent document 1, however, requires that each of the electric motors have a position detecting device and an arithmetic unit for calculating torque generated in order to enable perfectly synchronized operation, which makes the system large in scale. This results in an increased number of parts used, greater a probability of faults, and troublesome maintenance, thus degrading reliability of the system.

It is an object of the present invention to provide a highly reliable electrically-driven operating device that can automatically correct balance with a simple structure having a small number of parts used, and a working machine incorporating the same.

### Means for Solving the Problem

(1) To achieve the foregoing object, an aspect of the present invention provides an electrically-driven operating device, comprising: a first electrically-driven actuator driven by a first electric motor; a second electrically-driven actuator driven by a second electric motor; summing means for combining an output of the first electrically-driven actuator with an output of the second electrically-driven actuator; and control means for performing parallel operation of the first electric motor and the second electric motor. In the electrically-driven operating device, the first electric motor includes a rotor position sensor, while the second electric motor does not include a rotor position sensor; the control means performs the parallel operation of the first electric motor and the second electric motor based on a signal from the rotor position sensor; the first electric motor has a positional relationship between a rotor and a magnetic field under an operating condition thereof, the positional relationship producing a maximum torque of the first electric motor; and the second electric motor is configured to produce torque reduced from a maximum torque of the second electric motor under an operating condition thereof by being out of a positional relationship between a rotor and a magnetic field, the positional relationship producing the maximum torque of the second electric motor.
The foregoing arrangements allow a simple structure having a small number of parts used to automatically correct balance, achieving enhanced reliability.

(2) In (1) described above, preferably, load involved in operation of the electrically-driven operating device is distributed between the first electric motor and the second electric motor such that the load on the first electric motor is set to be greater than that on the second electric motor.

(3) In (2) described above, preferably, the summing means includes an unequal-length link, the unequal-length link being set to apply a greater load to the first electric motor.

(4) In (3) described above, preferably, the electrically-driven operating device further comprises: a third electrically-driven actuator driven by a third electric motor having a rotor position sensor; a fourth electrically-driven actuator driven by a fourth electric motor not having a rotor position sensor; a second unequal-length link set to combine an output of the third electrically-driven actuator with an output of the fourth electrically-driven actuator and to apply a greater load to the first electric motor; and an equal-length link connecting the unequal-length link to the second unequal-length link, the unequal-length link combining the output of the first electrically-driven actuator with the output of the second electrically-driven actuator.

(5) In (1) described above, preferably, the control means outputs a control signal that causes the output of the first electric motor to be smaller than that of the second electric motor; and the summing means equally combines the output of the first electrically-driven actuator with the output of the second electrically-driven actuator.

(6) In (1) described above, preferably, the first electric motor produces torque smaller than the second electric motor does relative to an identical current; and the summing means equally combines the output of the first electrically-driven actuator with the output of the second electrically-driven actuator.

(7) To achieve the foregoing object, another aspect of the present invention provides a working machine comprising an electrically-driven operating device and a driven member driven by the electrically-driven operating device. The electrically-driven operating device comprises: a first electrically-driven actuator driven by a first electric motor; a second electrically-driven actuator driven by a second electric motor; summing means for combining an output of the first electrically-driven actuator with an output of the second electrically-driven actuator; and control means for performing parallel operation of the first electric motor and the second electric motor. In the working machine, the first electric motor includes a rotor position sensor, while the second electric motor does not include a rotor position sensor; the control means performs the parallel operation of the first electric motor and the second electric motor based on a signal from the rotor position sensor; the first electric motor has a positional relationship between a rotor and a magnetic field under an operating condition thereof, the positional relationship producing a maximum torque of the first electric motor; and the second electric motor is configured to produce torque reduced from a maximum torque of the second electric motor under an operating condition thereof by being out of a positional relationship between a rotor and a magnetic field, the positional relationship producing the maximum torque of the second electric motor.
The foregoing arrangements allow a simple structure having a small number of parts used to automatically correct balance, achieving enhanced reliability.

### Effect of the Invention

The present invention allows balance to be automatically corrected with a simple structure incorporating a small number of parts, thus achieving enhanced reliability.

### Brief Description of the Drawings

Fig. 1 is a configuration diagram showing a working machine that incorporates an electrically-driven operating device according to a first embodiment of the present invention.
Fig. 2 is a partial cross-sectional view showing an electrically-driven actuator incorporated in the electrically-driven operating device according to the first embodiment of the present invention.
Fig. 3 is a partial cross-sectional view showing the electrically-driven actuator incorporated in the electrically-driven operating device according to the first embodiment of the present invention.
Fig. 4 is a schematic diagram showing a relationship between an electric motor and an electric system in the electrically-driven operating device according to the first embodiment of the present invention.
Fig. 5 is a diagram illustrating operation of an electrically-driven operating device as a comparative example.
Fig. 6 is a diagram illustrating operation of the electrically-driven operating device according to the first embodiment of the present invention.
Fig. 7 is a configuration diagram showing an electrically-driven operating device according to a second embodiment of the present invention.
Fig. 8 is a configuration diagram showing an electrically-driven operating device according to a third embodiment of the present invention.
Fig. 9 is a configuration diagram showing an electrically-driven operating device according to a fourth embodiment of the present invention.
Fig. 10 is a configuration diagram showing a working machine that incorporates an electrically-driven operating device according to a fifth embodiment of the present invention.
Fig. 11 is a configuration diagram showing a working machine that incorporates an electrically-driven operating device according to a sixth embodiment of the present invention.
Fig. 12 is a second configuration diagram showing a working machine that incorporates the electrically-driven operating device of each of the embodiments of the present invention.
Fig. 13 is a third configuration diagram showing a working machine that incorporates the electrically-driven operating device of each of the embodiments of the present invention.

### Modes for Carrying Out the Invention

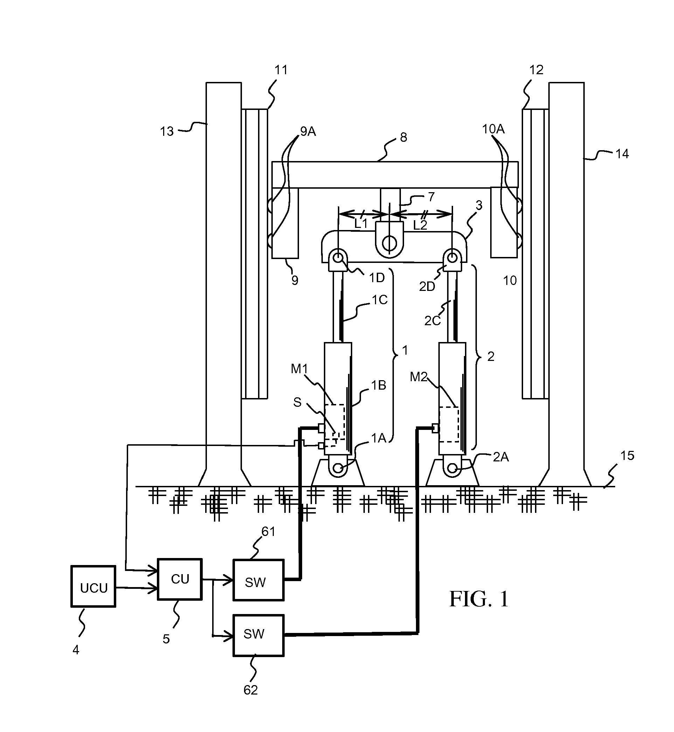

Arrangements and operation of an electrically-driven operating device according to a first embodiment of the present invention will be described below with reference to Figs. 1 to 6.
First, arrangements of a working machine that incorporates the electrically-driven operating device according to the embodiment will be described with reference to Fig. 1. A lifting apparatus that raises or lowers cargo at, for example, a factory will be described as an example of the working machine.
Fig. 1 is a configuration diagram showing the working machine that incorporates an electrically-driven operating device according to the first embodiment of the present invention.

A lifting base 8 includes guide wheels 9A, 10A that are disposed in guide wheel boxes 9, 10 and that travel along guide rails 11, 12 fixed to support columns 13, 14, which results in the lifting base 8 making vertical movement. The support columns 13, 14 are fixed to a floor 15. A first electrically-driven actuator 1 and a second electrically-driven actuator 2 are disposed so as to generate a force to move the lifting base 8 up and down. The first electrically-driven actuator 1 includes a built-in electric motor M1 having a sensor S attached thereto. The second electrically-driven actuator 2 includes a built-in electric motor M2 having no sensor.

Each of the electric motors M1, M2 is a three-phase synchronous motor incorporating a permanent magnet for a motor rotor thereof. A magnetic field generated through energization is controlled to be brought to an appropriate position relative to the motor rotor, which generates rotational torque in the motor rotor. This makes information on the rotational position of the motor rotor indispensable to rotation of the electric motor. The sensor S may, for example, be a magnetic pole position sensor that detects the position of the permanent magnet disposed in the motor rotor or a resolver that detects the rotational position of the motor rotor.

The first electrically-driven actuator 1 is connected to the floor via a freely rotatable joint 1A. The first electrically-driven actuator 1 is connected to an unequal-length link 3 via a freely rotatable joint 1D. Similarly, the second electrically-driven actuator 2 is connected to the floor via a freely rotatable joint 2A and to the unequal-length link 3 via a freely rotatable joint 2D.

The unequal-length link 3 is connected to the lifting base 8 via a freely rotatable center joint 7. It is here noted that a length L1 between the center joint 7 and the freely rotatable joint 1A of the first electrically-driven actuator 1 differs from a length L2 between the center joint 7 and the freely rotatable joint 2A of the second electrically-driven actuator 2. Specifically, the length L1 between the center joint 7 and the freely rotatable joint 1A of the first electrically-driven actuator 1 including the sensor is set to be shorter than the length L2. For example, the ratio of the length L1 to the length L2 is 0.95 to 1.0. The unequal-length link 3 serves as summing means that combines outputs of the first electrically-driven actuator 1 and the second electrically-driven actuator 2.

An actuator control signal from a host controller (UCU) 4 is input to a microprocessor control unit (CU) 5. A sensor signal output from the first electrically-driven actuator 1 is input to the microprocessor control unit 5. The microprocessor control unit 5 uses a built-in program to calculate a three-phase drive signal required for driving the electric motor and applies the signal to a first switching element (SW) 61 and a second switching element (SW) 62. The first switching element 61 and the second switching element 62 convert DC electricity to corresponding three-phase AC electricity based on the three-phase drive signal from the control unit 5, thereby supplying the three-phase AC electricity to the electric motor M1 of the first electrically-driven actuator 1 and the electric motor M2 of the second electrically-driven actuator 2, respectively.

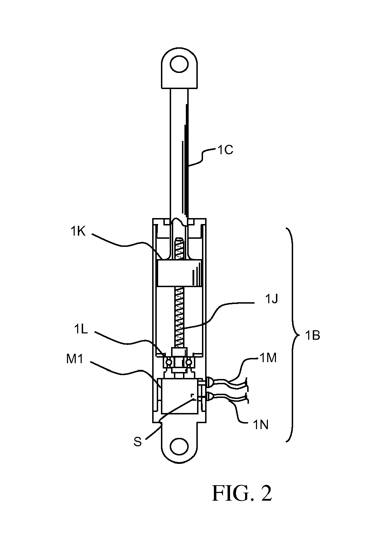

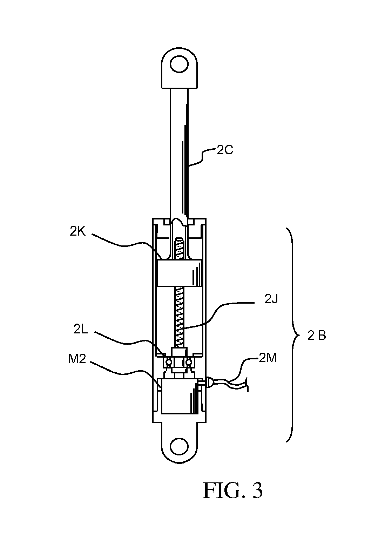

Arrangements of the electrically-driven actuator incorporated in the electrically-driven operating device according to this embodiment will be described below with reference to Figs. 2 and 3.
Figs. 2 and 3 are partial cross-sectional views showing the electrically-driven actuator incorporated in the electrically-driven operating device according to the first embodiment of the present invention.

Fig. 2 shows arrangements of the first electrically-driven actuator 1.

The first electrically-driven actuator 1 includes a first cylinder section 1B and a first piston section 1C. The first piston section 1C is pushed into, and pulled out of, the first cylinder section 1B to vary the length of the actuator, thereby driving an external device. The first piston section 1C is connected to a first nut 1K and the first cylinder section 1B is connected to a first screw 1J via a first bearing 1L. The first cylinder section 1B includes a first electric motor M1 that generates torque for rotating the first screw 1J. The electric motor M1 generates torque to thereby rotate the first screw 1J, which results in the first nut 1K making translational motion through a screw mechanism. As a result, the actuator varies its length. The first electric motor M1 has the sensor S for detecting the position of the motor rotor. The sensor S outputs a motor rotor position signal to outside through a first signal cable 1N. In addition, electricity is supplied from outside to the electric motor through a first power cable 1M.

Fig. 3 shows arrangements of the second electrically-driven actuator 2.

The second electrically-driven actuator 2 includes a first cylinder section 2B and a first piston section 2C. The first piston section 2C is pushed into, and pulled out of, the first cylinder section 2B to vary the length of the actuator, thereby driving an external device. The first piston section 2C is connected to a first nut 2K and the first cylinder section 2B is connected to a first screw 2J via a first bearing 2L. The first cylinder section 2B includes a second electric motor M2 that generates torque for rotating the first screw 2J. The electric motor M2 generates torque to thereby rotate the first screw 2J, which results in the first nut 2K making translational motion through a screw mechanism. As a result, the actuator varies its length. Unlike the first electric motor M1 shown in Fig. 2, the second electric motor M2 has no sensor S for detecting the position of the motor rotor. Therefore, the first signal cable 1N for outputting a sensor output to outside is not provided. Electricity is supplied from outside to the electric motor through a first power cable 2M.

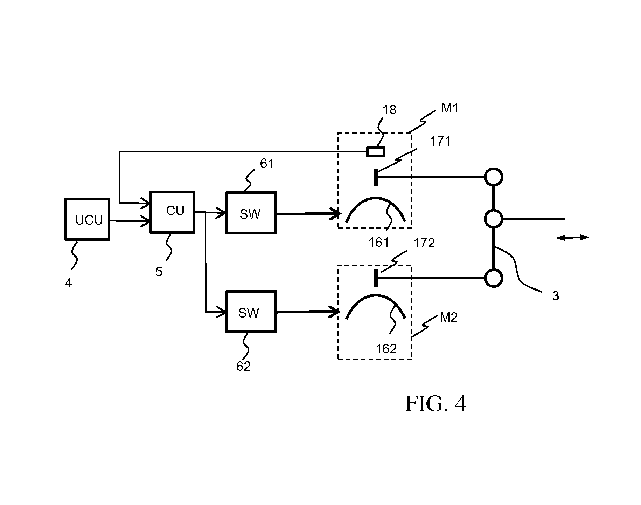

A relationship between the electric motor and an electric system in the electrically-driven operating device according to this embodiment will be described below with reference to Fig. 4.
Fig. 4 is a schematic diagram showing a relationship between the electric motor and the electric system in the electrically-driven operating device according to the first embodiment of the present invention. Like or corresponding parts are identified by the same reference numerals as those used in Fig. 1.

In the first electric motor M1, an upwardly protruding curve denotes a magnetic field 161 generated through energization, a vertical bar denotes a motor rotor position 171, and a small rectangle denotes a position sensor 18 of the rotor. The torque generated in the motor rotor is the greatest when the motor rotor position 171 is at an apex portion of the magnetic field 161 generated through energization and decreases with the position deviating therefrom. The upwardly protruding curve schematically shows a phenomenon exhibited by the torque when the position deviates.

Drive control of the electric motor M1 is performed as follows. Specifically, the motor rotor position 171 is detected by the position sensor 18 and, based on the position thus detected, the position of the magnetic field is adjusted using the microprocessor control unit 5 and the switching element 61 to thereby bring the motor rotor position 171 to the apex portion of the magnetic field 161.

In the second electric motor M2, too, an upwardly protruding curve denotes a magnetic field 162 generated through energization and a vertical bar denotes a motor rotor position 172. It should, however, be noted that the second electric motor M2 has no position sensor 18.

In order to implement parallel operation of the two actuators, the first actuator 1 and the second actuator 2 are mechanically restricted by the unequal-length link 3; based on the sensor signal output from the sensor S of the first actuator 1, the control unit 5 generates a drive signal for the electric motor to thereby control the position of the magnetic field 161 of the electric motor of the first actuator and the position of the magnetic field 162 of the electric motor of the second actuator; the first actuator 1 and the second actuator 2 are thereby operated.

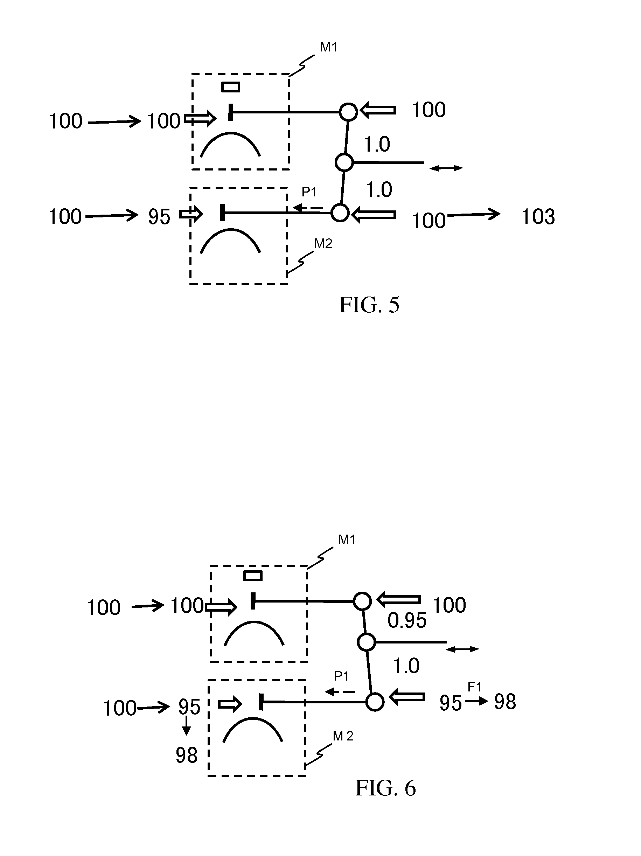

Operation of the electrically-driven operating device according to this embodiment will be described below with reference to Figs. 5 and 6.
Fig. 5 is a diagram illustrating operation of an electrically-driven operating device as a comparative example. Fig. 6 is a diagram illustrating operation of the electrically-driven operating device according to the first embodiment of the present invention. Like or corresponding parts are identified by the same reference numerals as those used in Figs. 1 to 4.

When a cargo is to be raised using the lifting apparatus, the cargo is placed on the lifting base 8 and then electricity is supplied to each of the first electrically-driven actuator 1 and the second electrically-driven actuator 2 to thereby extend the length of the actuators, so that the lifting base 8 is raised.

In a case in which a plurality of electrically-driven actuators are installed and the length of each of the electrically-driven actuators is controlled to thereby control the position of the lifting base 8, a link is used to combine outputs of the two actuators. In this case, load applied to the electrically-driven actuators may be uneven due to, for example, deviation in positions resulting from part-to-part variations in dimensions of members that constitute the device, deformation in members caused by load, or clearance between members, or uneven load as determined by a specific position at which the cargo is placed.

With reference to Fig. 5, operation when an equal-length link is incorporated instead of the unequal-length link 3 of the arrangement shown in Fig. 4 will be described.

Before unevenness occurs in the load, if load to the first electric motor M1 corresponds to 100 N, the output torque of the first electric motor M1 is controlled so as to correspond to 100 N. Being supplied with the same electricity as that supplied to the first electric motor M1, the second electric motor M2 produces an output torque that corresponds to 100 N. With no uneven load, the load to the second electric motor M2 corresponds to 100 N and a balance is maintained.

Suppose that unevenness occurs in the load under the foregoing condition and only the load to the second electric motor M2 increases so as to correspond to 103 N. The first electric motor M1 maintains a balanced state and the rotor position does not change. As a result, there is no change in information transmitted from the position sensor to the microprocessor control unit. Therefore, the output torque of the first electric motor M1 and the second electric motor M2 remains unchanged. Because the load to the second electric motor M2 increases to correspond to 103 N, however, balance of force in the second electric motor M2 is disrupted, so that the piston moves in a direction of an arrow P1, which moves the rotor position out of a point at which a maximum torque occurs. This deviation in position causes the torque produced by the second electric motor M2 to decrease even further from that which corresponds to 100 N, making the rotor position fall in a vicious circle of moving. As such, the change occurs in a direction of disrupting the balance of force and the rotor position constantly changes until the rotor is eventually restricted from moving by, for example, a mechanical stopper disposed in the lifting apparatus. This results in increased power loss caused by, for example, the mechanical stopper, aggravated apparatus efficiency, or greater possibility of fault caused by, for example, wear.

Fig. 6 shows the arrangement in which the unequal-length link according to the embodiment is incorporated. The arrangement is set such that the unequal-length link causes load to the first electric motor is greater. Assume, for example, that the load to the first electric motor M1 corresponds to 100 N and the load to the second electric motor M2 corresponds to 100 N. In this case, control is performed such that the first electric motor M1 produces an output torque that corresponds to 100 N. Being supplied with the same electricity as that supplied to the first electric motor M1, the second electric motor M2 produces an output torque that corresponds to 100 N.

The first electric motor M1 maintains a balanced state and the rotor position does not change; however, balance of force in the second electric motor M2 is disrupted, so that the rotor position moves out of a point at which a maximum torque occurs. This deviation in position causes the torque produced by the second electric motor M2 to decrease. The second electric motor M2 produces an output torque that corresponds to 95 N and load to the second electric motor M2 shifts into a state of corresponding to 95 N, wherein a balance is achieved.

Suppose that unevenness occurs in the load under the foregoing condition and only the load to the second electric motor M2 increases so as to correspond to 98 N. The first electric motor M1 maintains a balanced state and the rotor position does not change. As a result, there is no change in information transmitted from the position sensor to the microprocessor control unit. Because the load to the second electric motor M2 has increased to a level corresponding to 98 N, however, balance of force in the second electric motor M2 is disrupted, so that the piston moves in a direction of an arrow P1, which moves the rotor position. This deviation in position acts in the direction of the arrow P1, which increases torque produced by the second electric motor M2. As the torque produced by the second electric motor M2 then becomes a level corresponding to 98 N, a balance is achieved again.

As such, the arrangement undergoes changes so as to achieve a balance in force, converging on a point of stability without using, for example, a mechanical stopper. Therefore, power loss can be eliminated, apparatus efficiency can be improved, and possibility of fault caused by, for example, wear can be reduced.

In the lifting apparatus of this embodiment, the arrangement described with reference to Fig. 6 is formed of the first electrically-driven actuator 1, the second electrically-driven actuator 2, and the unequal-length link 3. Because of the unequal-length link 3, a greater load is applied to the first electrically-driven actuator 1 having the position sensor than that applied to the second electrically-driven actuator 2. In this case, the above-described motion to converge on the point of balance is achieved during operation of the lifting apparatus, which permits movement without allowing an excessive load to be applied to the guide rail as a result of disrupted balance.

As described heretofore, deviation in positions resulting from part-to-part variations in dimensions of members that constitute the device, deformation in members caused by load, or clearance between members, or uneven load as determined by a specific position at which the cargo is placed causes the load to be unevenly applied to the electrically-driven actuators, thereby disrupting the balance of force. This actuates, for example, the mechanical stopper to thereby increase power loss, aggravate apparatus efficiency, or increase possibility of fault caused by, for example, wear. In this embodiment, such situations can be prevented from occurring and a highly reliable electrically-driven operating device can be provided that can automatically correct balance.

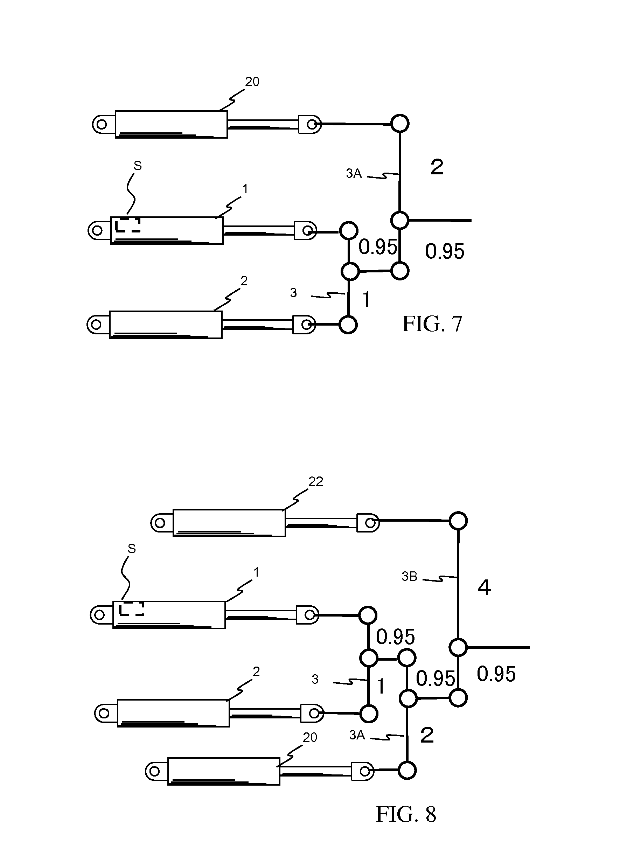

Arrangements of an electrically-driven operating device according to a second embodiment of the present invention will be described below with reference to Fig. 7. A working machine that incorporates the electrically-driven operating device according to this embodiment has the same arrangements as those shown in Fig. 1.
Fig. 7 is a configuration diagram showing the electrically-driven operating device according to the second embodiment of the present invention.

A first electrically-driven actuator 1 with a sensor and a second electrically-driven actuator 2 without a sensor are adapted to combine forces using an unequal-length link 3 having a length ratio of 1 to 0.95 so as to apply a greater load to the first electrically-driven actuator 1 with a sensor. In addition, a resultant force of the first electrically-driven actuator 1 with a sensor and the second electrically-driven actuator 2 without a sensor, and a third electrically-driven actuator 20 without a sensor are adapted to combine forces using an unequal-length link 3A having a length ratio of 2 to 0.95 so as to apply a greater load to the first electrically-driven actuator 1 with a sensor.

For a system in which three electrically-driven actuators are disposed in parallel with each other in order to obtain a large driving force for driving the working machine, the arrangement shown in Fig. 7 achieves a highly reliable electrically-driven operating device that can automatically correct balance with a simple structure having a small number of parts used.

Arrangements of an electrically-driven operating device according to a third embodiment of the present invention will be described below with reference to Fig. 8. A working machine that incorporates the electrically-driven operating device according to this embodiment has the same arrangements as those shown in Fig. 1.
Fig. 8 is a configuration diagram showing the electrically-driven operating device according to the third embodiment of the present invention.

A first electrically-driven actuator 1 with a sensor and a second electrically-driven actuator 2 without a sensor are adapted to combine forces using an unequal-length link 3 having a length ratio of 1 to 0.95 so as to apply a greater load to the first electrically-driven actuator 1 with a sensor. In addition, a resultant force of the first electrically-driven actuator 1 with a sensor and the second electrically-driven actuator 2 without a sensor, and a third electrically-driven actuator 20 without a sensor are adapted to combine forces using an unequal-length link 3A having a length ratio of 2 to 0.95 so as to apply a greater load to the first electrically-driven actuator 1 with a sensor. Additionally, a resultant force on the side of the first electrically-driven actuator 1 with a sensor, and a fourth electrically-driven actuator 22 without a sensor are adapted to combine forces using an unequal-length link 3B having a length ratio of 4 to 0.95 so as to apply a greater load to the first electrically-driven actuator 1 with a sensor.

For a system in which four electrically-driven actuators are disposed in parallel with each other in order to obtain a large driving force for driving the working machine, the arrangement shown in Fig. 8 achieves a highly reliable electrically-driven operating device that can automatically correct balance with a simple structure having a small number of parts used.

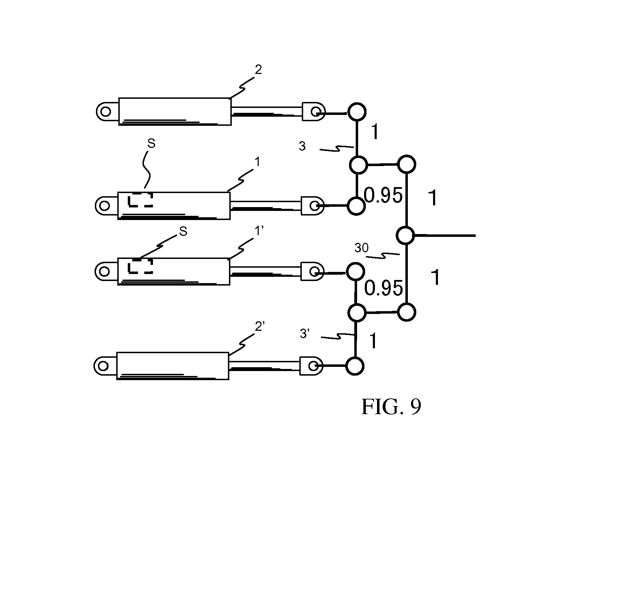

Arrangements of an electrically-driven operating device according to a fourth embodiment of the present invention will be described below with reference to Fig. 9. A working machine that incorporates the electrically-driven operating device according to this embodiment has the same arrangements as those shown in Fig. 1.
Fig. 9 is a configuration diagram showing the electrically-driven operating device according to the fourth embodiment of the present invention.

A first electrically-driven actuator 1 with a sensor and a second electrically-driven actuator 2 without a sensor are adapted to combine forces using an unequal-length link 3 having a length ratio of 1 to 0.95 so as to apply a greater load to the first electrically-driven actuator 1 with a sensor. Similarly, a first electrically-driven actuator 1' with a sensor and a second electrically-driven actuator 2' without a sensor are adapted to combine forces using an unequal-length link 3' having a length ratio of 1 to 0.95 so as to apply a greater load to the first electrically-driven actuator 1' with a sensor.

In addition, the side of the first electrically-driven actuator 1 and the side of the first electrically-driven actuator 1' are adapted to combine forces using an equal-length link 30.

As compared with the arrangement shown in Fig. 8, this arrangement requires one more electrically-driven actuator 1 with a sensor; however, the arrangement simultaneously controls two electrically-driven actuators with a sensor, which enhances controllability.

For a system in which four electrically-driven actuators are disposed in parallel with each other in order to obtain a large driving force for driving the working machine, the arrangement shown in Fig. 9 achieves a highly reliable electrically-driven operating device that can automatically correct balance with a simple structure having a small number of parts used.

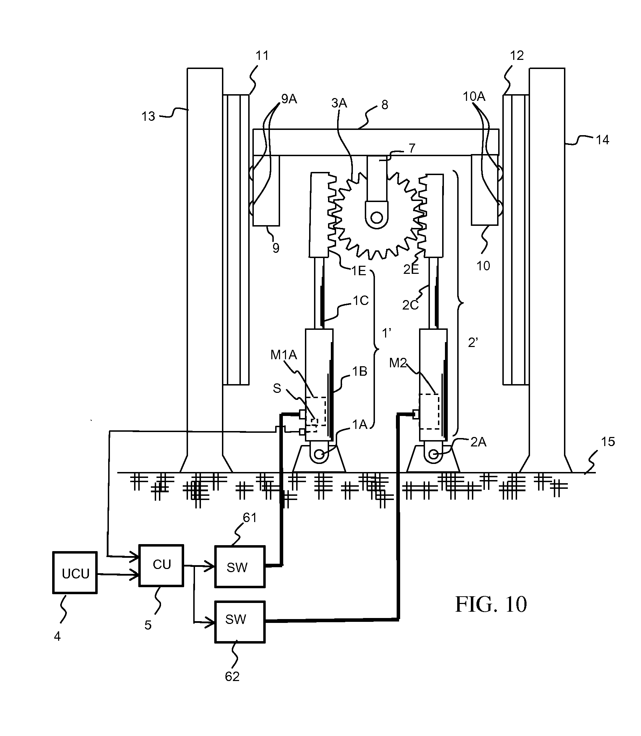

Arrangements of a working machine incorporating an electrically-driven operating device according to a fifth embodiment of the present invention will be described below with reference to Fig. 10.
Fig. 10 is a configuration diagram showing a working machine that incorporates the electrically-driven operating device according to the fifth embodiment of the present invention. Like or corresponding parts are identified by the same reference numerals as those used in Fig. 1.

In this embodiment, an electric motor incorporated in an actuator with a sensor delivers a smaller output torque relative to the same current than an electric motor incorporated in another actuator without a sensor does. The output of the actuator with a sensor is thus made small and summing means is incorporated to combine outputs of the two actuators, thereby achieving the same effect as that achieved by the unequal-length link.

Most of the arrangements are similar to those shown in Fig. 1 and only differences will be described.

A first electrically-driven actuator 1' is a type of actuator having a sensor, in which a built-in electric motor M1A has a sensor S. A second electrically-driven actuator 2' is a type of actuator having no sensor, in which a built-in electric motor M2 has no sensor. If the same drive current is supplied to the electric motor M1A and the electric motor M2, the electric motor M1A delivers an output torque smaller than the electric motor M2 does. For example, the electric motor M1A is smaller in size than the electric motor M2. Alternatively, when the electric motor M1A and the electric motor M2 are identical in size, the number of turns of a stator winding of the electric motor M1A is smaller than the number of turns of a stator winding of the electric motor M2.

The first electrically-driven actuator 1' includes a rack 1E disposed at an upper portion of a first piston section 1C. Similarly, the second electrically-driven actuator 2' includes a rack 2E disposed at an upper portion of a second piston section 2C. The rack 1E and the rack 2E have an identical shape. The rack 1E and the rack 2E are each engaged with a pinion 3A. The rack 1E, the rack 2E, and the pinion 3A constitute the summing means that combines outputs of the first electrically-driven actuator 1' and the second electrically-driven actuator 2'. It is noted that an equal-length link may be used instead of the rack and pinion for the summing means.

In this embodiment, too, the arrangements shown in Fig. 10 achieve a highly reliable electrically-driven operating device that can automatically correct balance with a simple structure having a small number of parts used.

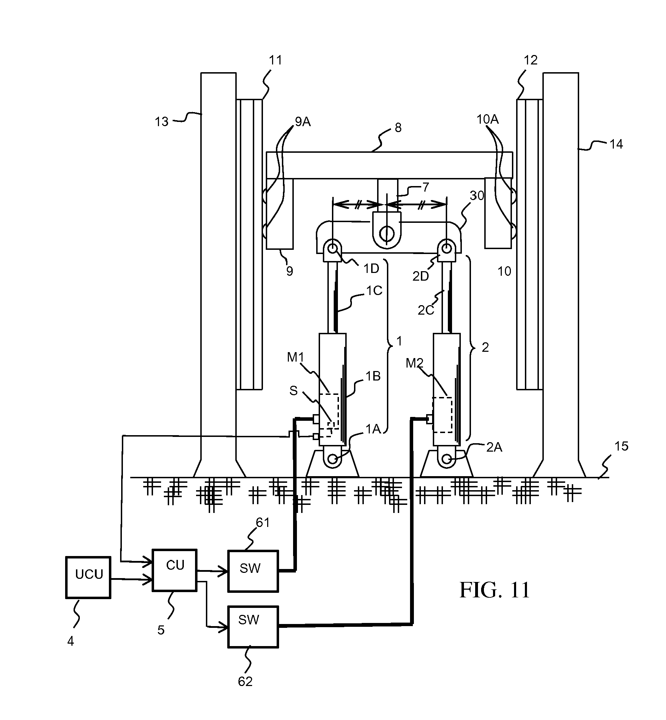

Arrangements of a working machine incorporating an electrically-driven operating device according to a sixth embodiment of the present invention will be described below with reference to Fig. 11.
Fig. 11 is a configuration diagram showing a working machine that incorporates the electrically-driven operating device according to the sixth embodiment of the present invention. Like or corresponding parts are identified by the same reference numerals as those used in Fig. 1.

In this embodiment, an equal-length link is incorporated and a switching element incorporated in an actuator with a sensor is adapted to control the output. The output is thereby made smaller than that delivered by an electric motor of another actuator having no sensor, thus achieving the same effect as that achieved by the unequal-length link.

Most of the arrangements are similar to those shown in Fig. 1 and only differences will be described.

A first electrically-driven actuator 1 and a second electrically-driven actuator 2 are connected together with an equal-length link 30 with which outputs of the two are to be combined. A control unit 5A provides a control signal for a switching element 61 that is different from a control signal for a switching element 62. Specifically, when the control signal is output to the switching element 61 so that a first electric motor incorporated in the first electrically-driven actuator 1 produces an output corresponding to, for example, 100 N, the control signal is output to the switching element 62 so that a second electric motor incorporated in the second electrically-driven actuator 2 produces an output corresponding to, for example, 103 N. For example, the current to be passed through the second electric motor is made larger relative to the current to be passed through the first electric motor, which makes the output of the second electric motor large.

In this embodiment, too, the arrangements shown in Fig. 11 achieve a highly reliable electrically-driven operating device that can automatically correct balance with a simple structure having a small number of parts used.

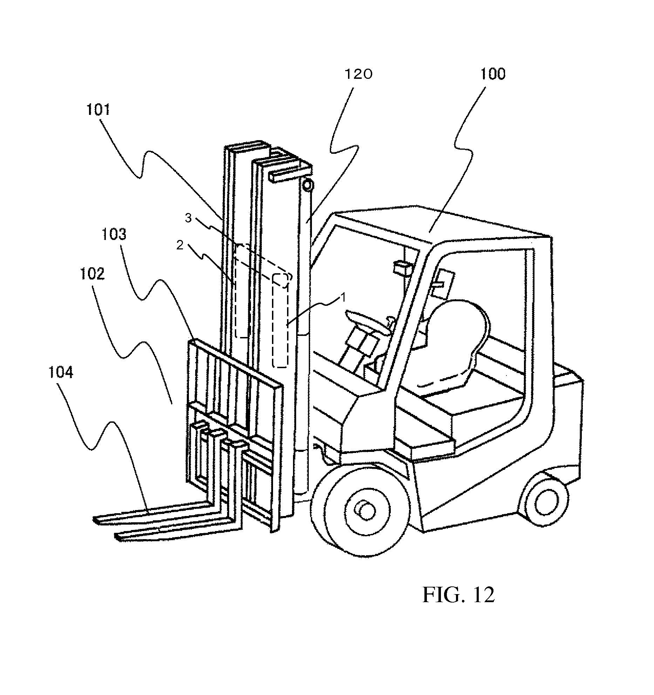

A second configuration of a working machine incorporating an electrically-driven operating device according to each of the embodiments of the present invention will be described below with reference to Fig. 12.
Fig. 12 is a second configuration diagram showing a working machine that incorporates the electrically-driven operating device of each of the embodiments of the present invention. Like or corresponding parts are identified by the same reference numerals as those used in Fig. 1.

The working machine of this embodiment is a forklift truck on which the electrically-driven actuator according to each of the embodiments of the present invention is mounted. The electrically-driven operating device includes the electrically-driven actuator 1, the electrically-driven actuator 2, and the unequal-length link 3 described with reference to Figs. 1 to 4. It is noted that the electrically-driven operating device described with reference to Figs. 7 to 11 may be used.

A mast 101 is attached to a main unit 100 of the forklift truck. A cargo lifting section 102 provided as an accessory to the mast 101 includes a holding frame 103 and a pair of forks 104. Specifically, the holding frame 103 is vertically movably mounted on an inner frame of the mast 101 via a lift bracket (not shown). The forks 104 are attached to the holding frame 103.

A combined electrically-driven actuator 120 is disposed on a side of the two masts 101 adjacent a driver's seat relative to the cargo lifting section 102 that corresponds to the lifting base 8 described with reference to the above embodiments. The combined electrically-driven actuator 120 includes the electrically-driven operating device formed of the electrically-driven actuator 1 with a sensor, the electrically-driven actuator 2, and the unequal-length link 3 described with reference to Figs. 1 to 4.

If the cargo is placed unevenly or the cargo lifting section 102 involves part-to-part variations when the cargo lifting section 102 is raised, the foregoing arrangements produce an effect of converging on the point of balance described with reference to the above embodiments. Capacity of the cargo lifting section 102 can thereby be prevented from being aggravated and the service life of the cargo lifting section 102 can be extended.

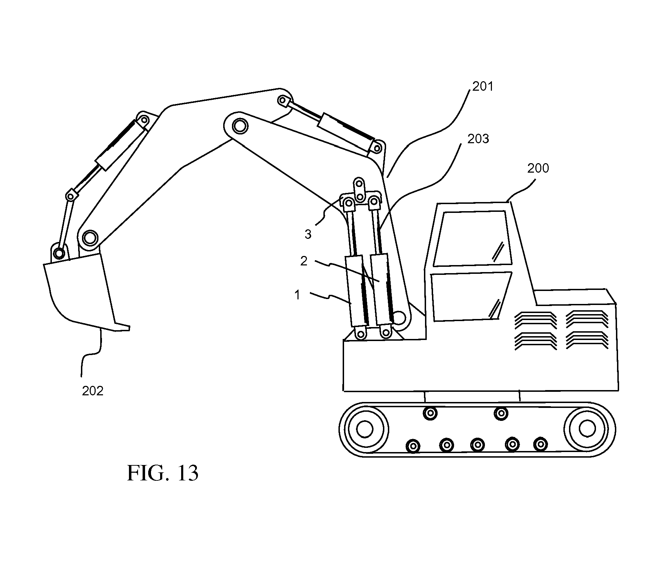

A third configuration of a working machine incorporating an electrically-driven operating device according to each of the embodiments of the present invention will be described below with reference to Fig. 13.
Fig. 13 is a third configuration diagram showing a working machine that incorporates the electrically-driven operating device of each of the embodiments of the present invention. Like or corresponding parts are identified by the same reference numerals as those used in Fig. 1.

The working machine of this embodiment is an excavator on which the electrically-driven actuator according to each of the embodiments of the present invention is mounted. The electrically-driven operating device includes the electrically-driven actuator 1, the electrically-driven actuator 2, and the unequal-length link 3 described with reference to Figs. 1 to 4. It is noted that the electrically-driven operating device described with reference to Figs. 7 to 11 may be used.

A main unit 200 of the excavator is attached with a boom 201. The boom 201 has an arm 204 mounted at a leading end thereof. The arm 204 has a bucket 202 mounted at a leading end thereof. The boom 201, the arm 204, and the bucket 202 are moved to dig earth or perform other operations. To move the boom, the boom is mounted with a combined electrically-driven actuator 203.

The combined electrically-driven actuator 203 includes the electrically-driven operating device formed of the electrically-driven actuator 1 with a sensor, the electrically-driven actuator 2, and the unequal-length link 3 described with reference to Figs. 1 to 4.

If the cargo is placed unevenly or the boom involves part-to-part variations when the boom is operated, the foregoing arrangements produce an effect of converging on the point of balance described with reference to the above embodiments. Operating performance of the boom can thereby be prevented from being aggravated and the service life of the boom can be extended.

### Description of Reference Characters

- 1:: first electrically-driven actuator
- 2:: second electrically-driven actuator
- 3:: unequal-length link
- 4:: host controller
- 5:: microprocessor control unit
- 61:: first switching element
- 62:: second switching element
- 8:: lifting base
- M1, M2:: electric motor
- S:: sensor

## Claims

1. An electrically-driven operating device, comprising:
a first electrically-driven actuator driven by a first electric motor;
a second electrically-driven actuator driven by a second electric motor;
summing means for combining an output of the first electrically-driven actuator with an output of the second electrically-driven actuator; and
control means for performing parallel operation of the first electric motor and the second electric motor, wherein
the first electric motor includes a rotor position sensor, while the second electric motor does not include a rotor position sensor;
the control means performs the parallel operation of the first electric motor and the second electric motor based on a signal from the rotor position sensor;
the first electric motor has a positional relationship between a rotor and a magnetic field under an operating condition thereof, the positional relationship producing a maximum torque of the first electric motor; and
the second electric motor is configured to produce torque reduced from a maximum torque of the second electric motor under an operating condition thereof by being out of a positional relationship between a rotor and a magnetic field, the positional relationship producing the maximum torque of the second electric motor.

2. The electrically-driven operating device according to claim 1, wherein
load involved in operation of the electrically-driven operating device is distributed between the first electric motor and the second electric motor, the load on the first electric motor being set to be greater than that on the second electric motor.

3. The electrically-driven operating device according to claim 2, wherein
the summing means includes an unequal-length link, the unequal-length link being set to apply a greater load to the first electric motor.

4. The electrically-driven operating device according to claim 3, further comprising:
a third electrically-driven actuator driven by a third electric motor having a rotor position sensor;
a fourth electrically-driven actuator driven by a fourth electric motor not having a rotor position sensor;
a second unequal-length link set to combine an output of the third electrically-driven actuator with an output of the fourth electrically-driven actuator and to apply a greater load to the first electric motor; and
an equal-length link connecting the unequal-length link to the second unequal-length link, the unequal-length link combining the output of the first electrically-driven actuator with the output of the second electrically-driven actuator.

5. The electrically-driven operating device according to claim 1, wherein
the control means outputs a control signal that causes the output of the first electric motor to be smaller than the output of the second electric motor; and
the summing means equally combines the output of the first electrically-driven actuator with the output of the second electrically-driven actuator.

6. The electrically-driven operating device according to claim 1, wherein
the first electric motor produces torque smaller than the second electric motor does relative to an identical current; and
the summing means equally combines the output of the first electrically-driven actuator with the output of the second electrically-driven actuator.

7. A working machine comprising:
an electrically-driven operating device including:
a first electrically-driven actuator driven by a first electric motor;
a second electrically-driven actuator driven by a second electric motor;
summing means for combining an output of the first electrically-driven actuator with an output of the second electrically-driven actuator; and
control means for performing parallel operation of the first electric motor and the second electric motor; and
a driven member driven by the electrically-driven operating device, wherein
the first electric motor includes a rotor position sensor, while the second electric motor does not include a rotor position sensor;
the control means performs the parallel operation of the first electric motor and the second electric motor based on a signal from the rotor position sensor;
the first electric motor has a positional relationship between a rotor and a magnetic field under an operating condition thereof, the positional relationship producing a maximum torque of the first electric motor; and
the second electric motor is configured to produce torque reduced from a maximum torque of the second electric motor under an operating condition thereof by being out of a positional relationship between a rotor and a magnetic field, the positional relationship producing the maximum torque of the second electric motor.
